(19) Europäisches Patentamt
European Patent Office
Office européen des brevets

(11) **EP 3 502 738 A1**

(12) **EUROPEAN PATENT APPLICATION**
published in accordance with Art. 153(4) EPC

(43) Date of publication:
**26.06.2019 Bulletin 2019/26**

(21) Application number: **17841292.0**

(22) Date of filing: **27.06.2017**

(51) Int Cl.:
*G01S 13/87* (2006.01)          *G01S 13/34* (2006.01)
*G01S 13/536* (2006.01)          *G01S 13/86* (2006.01)
*G08B 21/02* (2006.01)          *G08B 25/04* (2006.01)
*G08B 25/10* (2006.01)

(86) International application number:
**PCT/JP2017/023638**

(87) International publication number:
**WO 2018/034064 (22.02.2018 Gazette 2018/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **18.08.2016 JP 2016160343**

(71) Applicant: **Konica Minolta, Inc.
Tokyo 100-7015 (JP)**

(72) Inventor: **KUSUDA, Masayuki
Tokyo 100-7015 (JP)**

(74) Representative: **Burton, Nick
Urquhart-Dykes & Lord LLP
Arena Point
Merrion Way
Leeds LS2 8PA (GB)**

(54) **CARE SUPPORT SYSTEM**

(57)     A driving controller drives a first radio wave detector in a habitable room in a first driving mode for not modulating a radiation frequency of radio waves, and drives a second radio wave detector in the habitable room in a second driving mode for modulating the radiation frequency of the radio waves. A radiation frequency of the first driving mode is included in a modulation width of a radiation frequency modulated in the second driving mode. The driving controller selects any of a simultaneous driving pattern, a partial driving pattern, and a combination of the simultaneous driving pattern and the partial driving pattern that have been temporally shifted from each other. In the simultaneous driving pattern, the driving controller simultaneously drives the first radio wave detector and the second radio wave detector so that a difference is constantly generated between respective radiation frequencies. In the partial driving pattern, the driving controller only drives one of the first radio wave detector and the second radio wave detector, and stops driving of the other.

FIG. 7

## Description

Technical Field

The present invention relates to a care support system including a radio wave detector (a radio wave sensor) that detects the condition of a subject serving as a target to be detected by radiating and receiving radio waves.

Background Art

Doppler sensors that detect a moving body by radiating and receiving radio waves are used as a radio wave detector in various systems such as an automatic water feeder in a toilet system in which a plurality of urinals are arranged side by side. In the toilet system described above, when a Doppler sensor of a urinal that is not being used by a user receives reflected waves obtained by a human body reflecting radio waves (carrier waves) that have been transmitted by a Doppler sensor of another urinal that is being used by the user, the automatic water feeder may cause flushing water to flow in the urinal that is not being used by the user due to erroneous detection indicating that the user is using the urinal that is not being used by the user. In view of this, in Patent Literature 1, a probability of Doppler sensors interfering with each other is reduced by switching the frequency of carrier waves of a Doppler sensor at random in accordance with a random number generated by a random number generator and transmitting the carrier waves for which the frequency has been switched, and this enables a highly reliable automatic water feeder with a simple configuration to be realized.

In addition, for example, in Patent Literature 2, in a case where a plurality of microwave sensors are used that each detect an object in accordance with the transmission and reception of radio waves (microwaves), by randomly changing the detection cycle of each of the sensors in each detection operation, a probability of the continuous occurrence of detection operations being accidentally performed at the same timing is significantly reduced, and this suppresses an influence of mutual radio wave interference to a negligible level.

Citation List

Patent Literature

Patent Literature 1: JP 2009-080073 A (see claim 1, paragraphs [0001] to [0003], [0006], and [0009], and Figs. 1 to 4)
Patent Literature 2: JP 2005-265615 A (see claim 1, paragraph [0033], and Figs. 1 to 3)

Summary of Invention

Technical Problem

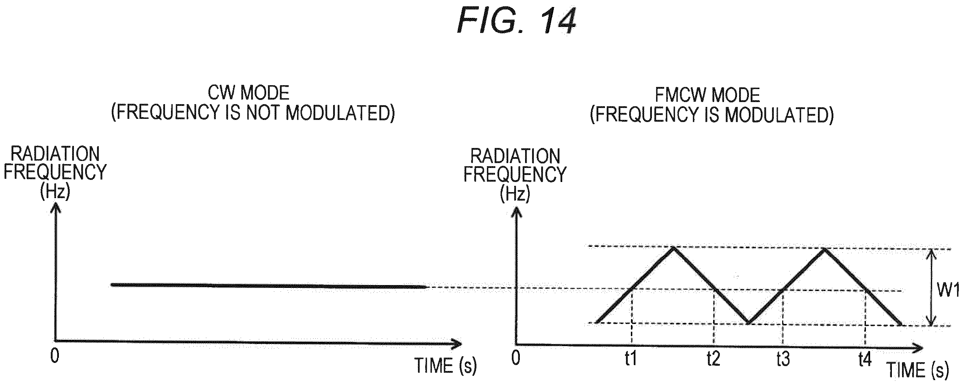

Meanwhile, examples of a driving mode of a radio wave sensor include a continuous wave (CW) mode and a frequency modulated continuous wave (FMCW) mode. As illustrated in Fig. 14, the CW mode is a driving mode for not modulating (not changing according to time) the radiation frequency of radio waves transmitted (radiated) from a radio wave sensor, and the FMCW mode is a driving mode for modulating (changing according to time) the radiation frequency of radio waves transmitted (radiated) from a radio wave sensor.

On the other hand, in recent years, in nursing facilities, hospitals, and the like, in order to support the daily life of a subject such as a care receiver, a care support system has been used that detects the condition of the subject by using a radio wave sensor and manages the condition in a server. In the care support system, when a radio wave sensor that is driven in the CW mode is used, a sensor sensitivity is high, and this enables the respiratory condition of the subject to be detected. When a radio wave sensor that is driven in the FMCW mode is used, a distance between the sensor and the subject can be measured, and this enables the occurrence or non-occurrence of falling-down to be detected (determined) on the basis of the measured distance. Accordingly, it is considered that, by using both the radio wave sensor that is driven in the CW mode and the radio wave sensor that is driven in the FMCW mode in the care support system, the respiratory condition of the subject can be detected and falling-down can also be detected.

However, when both the radio wave sensor that is driven in the CW mode and the radio wave sensor that is driven in the FMCW mode are used, at timings (for example, times t1, t2, t3, and t4) at which the radiation frequencies of both sensors match each other, as illustrated in Fig. 14, radio wave interference may occur, and the condition of the subject may be erroneously detected. In the care support system, when the erroneous detection described above occurs, the condition of the subject fails to be accurately grasped, and therefore the original purpose of the system of supporting the daily life of the subject is not achieved. Accordingly, in the care support system in which both the radio wave sensor that is driven in the CW mode and the radio wave sensor that is driven in the FMCW mode are used, it is requested that erroneous detection due to radio wave interference be eliminated, but such a technique has not yet been proposed.

Both Patent Literatures 1 and 2 described above target a system using a plurality of radio wave sensors that are driven in the CW mode, and do not disclose at all a method for eliminating radio wave interference in a system in which both the radio wave sensor that is driven in the CW mode and the radio wave sensor that is driven in the FMCW mode are used, namely, in a system in which a plurality of radio wave detectors that are driven in driving modes different from each other are used.

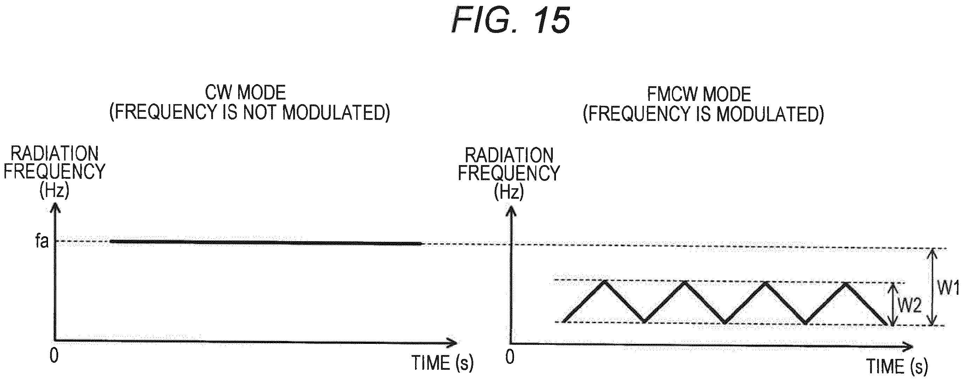

It is also considered that, in the system in which the plurality of radio wave detectors that are driven in driving modes different from each other are used, mutual radio wave interference can be eliminated, for example, by setting a modulation width W2 of a radiation frequency in the FMCW mode to be smaller than a modulation width W1 in the case of Fig. 14 and setting a radiation frequency fa in the CW mode outside the modulation width W2 of the radiation frequency in the FMCW mode, as illustrated in Fig. 15. However, the fluctuation width W1 of the radiation frequency in the FMCW mode is normally set to match a maximum fluctuation width of the frequency in the radio wave detector. This is because, when the modulation width of the radiation frequency in the FMCW mode is reduced, the accuracy of the measurement of a distance based on the FMCW mode is reduced. Accordingly, from the viewpoint of securing measurement accuracy in the FMCW mode, it is not desirable that the modulation width of the radiation frequency in the FMCW mode be set to W2, which is smaller than W1, and the radiation frequency fa in the CW mode be set outside the modulation width W2, as illustrated in Fig. 15.

The present invention has been made in order to solve the problems described above, and it is an object of the present invention to provide a care support system that can eliminate radio wave interference and can eliminate erroneous detection due to the radio wave interference even in a configuration in which a plurality of radio wave detectors that are driven in driving modes different from each other are used.

Solution to Problem

A care support system in one aspect of the present invention includes a first radio wave detector and a second radio wave detector that are provided in an identical habitable room of a subject and that radiate and receive radio waves, and a driving controller that controls driving of the first radio wave detector and the second radio wave detector. The driving controller drives the first radio wave detector in a first driving mode for not modulating a radiation frequency of the radio waves, and drives the second radio wave detector in a second driving mode for modulating the radiation frequency of the radio waves. A radiation frequency of the first driving mode is included in a modulation width of a radiation frequency modulated in the second driving mode. The driving controller selects any of a simultaneous driving pattern, a partial driving pattern, and a combination of the simultaneous driving pattern and the partial driving pattern that have been temporally shifted from each other. In the simultaneous driving pattern, the driving controller simultaneously drives the first radio wave detector and the second radio wave detector so that a difference is constantly generated between the radiation frequency of the first driving mode and a radiation frequency of the second driving mode. In the partial driving pattern, the driving controller only drives one of the first radio wave detector and the second radio wave detector, and stops driving of the other.

Advantageous Effects of Invention

Even when a care support system has a configuration in which a plurality of radio wave detectors that are driven in driving modes different from each other are used, radio wave interference can be eliminated and erroneous detection due to the radio wave interference can be eliminated by performing driving control by using the driving controller described above. Further, a radiation frequency of a first driving mode is included in a modulation width of a radiation frequency modulated in a second driving mode, and therefore erroneous detection due to radio wave interference can be eliminated in a state where a reduction in the accuracy of distance measurement performed by a second radio wave detector is avoided.

Brief Description of Drawings

Fig. 1 is an explanatory diagram illustrating a rough configuration of a care support system according to an embodiment of the present invention.

Fig. 2 is an explanatory diagram schematically illustrating a state inside a habitable room in which a moving body detection unit and a second radio wave detector of the care support system described above are provided.

Fig. 3 is an explanatory diagram illustrating examples of a transmitted wave and a reflected wave at the time of driving of the second radio wave detector described above.

Fig. 4 is a block diagram illustrating a rough configuration of the moving body detection unit described above.

Fig. 5 is a block diagram illustrating a detailed configuration of an optical detector included in the moving body detection unit described above.

Fig. 6 is an explanatory diagram schematically illustrating each detection range in the habitable room described above.

Fig. 7 is an explanatory diagram illustrating driving waveforms of the CW mode and the FMCW mode in a simultaneous driving pattern.

Fig. 8 is an explanatory diagram illustrating driving waveforms of the CW mode and the FMCW mode in a driving pattern in which the simultaneous driving pattern and a partial driving pattern are combined.

Fig. 9 is an explanatory diagram schematically illustrating that a driving controller has determined that a care receiver is present in an area that is part of the habitable room described above.

Fig. 10 is an explanatory diagram schematically illustrating that the driving controller has determined that a care receiver is absent in the area.

Fig. 11 is an explanatory diagram illustrating respective driving waveforms of the CW mode and the FMCW mode in the partial driving pattern.

Fig. 12 is an explanatory diagram illustrating an example of driving control on a first radio wave detector and the second radio wave detector in the partial driving pattern described above.

Fig. 13 is a flowchart illustrating the flow of an operation in the partial driving pattern described above.

Fig. 14 is an explanatory diagram illustrating respective driving waveforms of a conventional CW mode and a conventional FMCW mode.

Fig. 15 is an explanatory diagram illustrating respective driving waveforms when a radiation frequency in the CW mode described above is set outside the modulation width of a radiation frequency in the FMCW mode described above.

Description of Embodiments

An embodiment of the present invention will be described below with reference to the drawings. Herein, in a case where a numerical range is expressed as A to B, the numerical range is assumed to include values of a lower limit A and an upper limit B. In addition, herein, driving a radio wave detector means at least causing the radio wave detector to radiate radio waves, and may also include a concept of receiving radio waves.

[Care Support System]

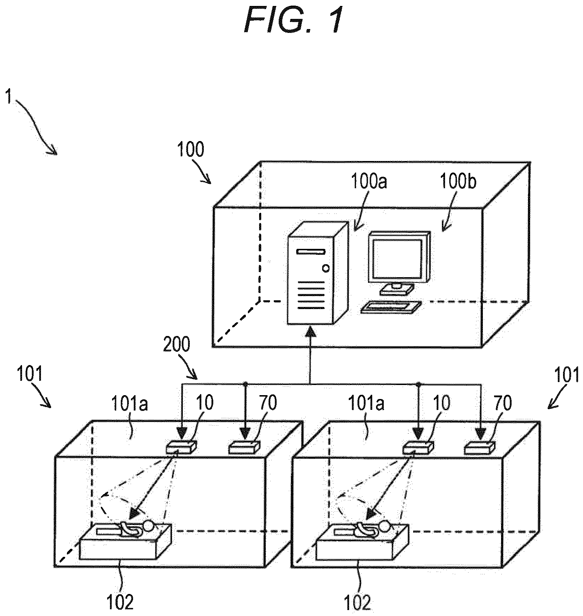

Fig. 1 is an explanatory diagram illustrating a rough configuration of a care support system 1 according to the present embodiment. The care support system 1 is a system for supporting the daily life of a care receiver who lives in a nursing facility or a patient (a person to be nursed) who is in hospital, and is also called a watching system. The care receiver and the person to be nursed are targets to be supported by the care support system 1, namely, target persons (subjects) to be managed according to recognition, detection, and the like performed by the image recognition system 20 described later and a radio wave detector. Here, as an example, a case where the care support system 1 has been constructed inside a nursing facility is described.

In the care support system 1 according to the present embodiment, a plurality of radio wave detectors are provided in an identical habitable room 101 of a care receiver. From among the plurality of radio wave detectors, a radio wave detector that is provided inside the moving body detection unit 10 described later is referred to as a first radio wave detector 30, and a radio wave detector that is provided outside the moving body detection unit 10 is referred to as a second radio wave detector 70, so that the plurality of radio wave detectors are distinguished from each other.

In the nursing facility, a staff station 100 and the habitable room 101 are provided. The staff station 100 is what is called a station of care givers who support the lives of care receivers who live in the nursing facility. In this staff station 100, a management server 100a and a display 100b are provided. The management server 100a is a terminal device that is communicably connected via a communication line 200 to the moving body detection unit 10 and a second radio wave detector 70 that are provided in the habitable room 101 and that are described later, and the management server 100a includes a central processing unit (CPU). The communication line 200 is configured, for example, by a wired local area network (LAN), but of course, the communication line 200 may be a wireless LAN.

The management server 100a receives and manages, via the communication line 200, various types of information (such as a photographed image of the inside of the habitable room 101 or biological information (for example, information indicating a respiratory condition) of a care receiver) that are transmitted from the moving body detection unit 10 or information indicating a detection result transmitted from the second radio wave detector 70, and performs processing for displaying the received information on the display 100b. By doing this, a care giver in the nursing facility can view the information displayed on the display 100b, and can grasp the condition (such as a respiratory condition or the occurrence or non-occurrence of falling-down) of the care receiver. The display 100b can be configured, for example, by a display of a personal computer. In addition, when it is recognized in image recognition processing performed by the image recognition system 20 described later that the care receiver has performed an abnormal action such as falling down to a floor, the management server 100a can receive information indicating this fact from the moving body detection unit 10, can transmit, to a portable terminal possessed by the care giver, data of a photographed image of the inside of the habitable room 101 that has been obtained by an optical detector 23 of the moving body detection unit 10, and can report the abnormality of the care receiver to the care giver. When image data is transmitted from the moving body detection unit 10 to the management server 100a and when image data is transmitted from the management server 100a to the portable terminal described above, the capacity, size, resolution, and the like of an image are appropriately adjusted.

At least one habitable room 101 is provided in the nursing facility, and Fig. 1 illustrates, as an example, a case where two habitable rooms 101 are provided. Inside the habitable room 101, one bed 102 to be used by the care receiver is provided. In a case where two or more care receivers live in one habitable room 101, a plurality of beds 102 that correspond to the respective care receivers are provided.

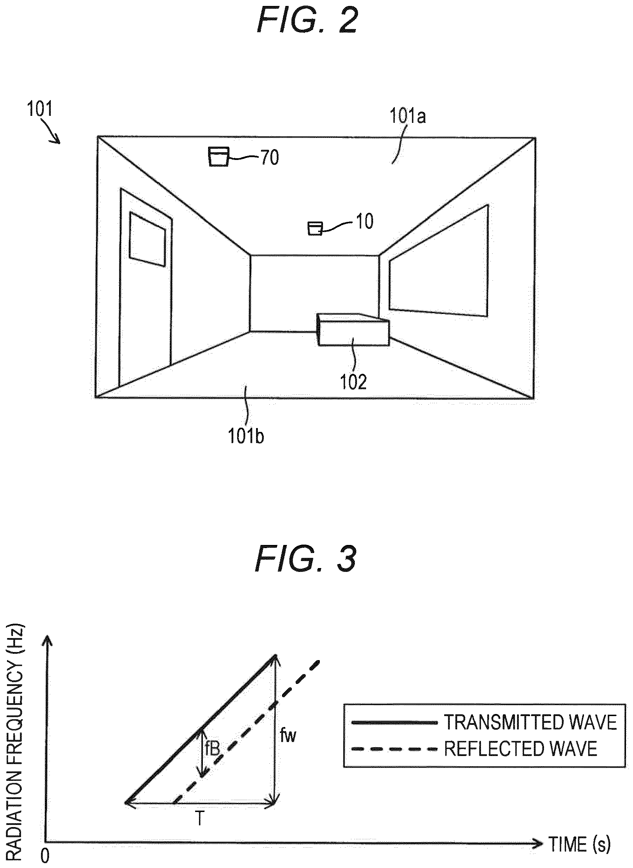

Fig. 2 is an explanatory diagram schematically illustrating a state inside the habitable room 101 in which the moving body detection unit 10 is provided. As illustrated in Figs. 1 and 2, the moving body detection unit 10 is provided on a ceiling 101a of each of the habitable rooms 101, and is communicably connected to the communication line 200. In a case where the habitable room 101 is a multi-bed room in which a plurality of beds 102 are provided, one moving body detection unit 10 is provided for one bed 102.

On the ceiling 101a of each of the habitable rooms 101, the second radio wave detector 70 is provided in addition to the moving body detection unit 10 described above. Figs. 1 and 2 illustrate an example where one second radio wave detector 70 is provided in each of the habitable rooms 101, but the number of second radio wave detectors 70 provided in each of the habitable rooms 101 may be two or more. For example, in a case where the entirety of the habitable room 101 is sectioned into a plurality of areas by walls or the like, the second radio wave detector 70 may be arranged in two or more areas. The second radio wave detector 70 is communicably connected to the communication line 200. As a result, the moving body detection unit 10, the second radio wave detector 70, and the management server 100a are communicable to each other via the communication line 200.

[Second Radio Wave Detector]

The second radio wave detector 70 is configured by a radio wave sensor that includes a not-illustrated radiation unit and a not-illustrated receiver that radiate and receive radio waves, and the second radio wave detector 70 is provided outside the moving body detection unit 10 in the habitable room 101. The second radio wave detector 70 is driven in the FMCW mode (a second driving mode) for modulating a radiation frequency of radio waves, and measures a distance between the second radio wave detector 70 and a care receiver by radiating, for example, microwaves in a 24 GHz band and receiving reflected waves that have been reflected by the care receiver. This enables the falling-down of the care receiver to be detected according to the measured distance. Driving control on the second radio wave detector 70 is performed, for example, by the management server 100a via the communication line 200, but may be performed by the unit controller 40 described later of the moving body detection unit 10. In this case, the management server 100a or the unit controller 40 functions as a driving controller that controls the driving of the second radio wave detector 70.

Here, an example of a method for determining whether the care receiver has fallen down is described. In the FMCW mode, in a case where the radiation frequency of radio waves is linearly changed, as illustrated in Fig. 3, for example, a distance d (m) between the second radio wave detector 70 and the care receiver can be obtained from a frequency difference (a beat frequency) between transmitted waves and reflected waves, or the like. Specifically, the distance d can be obtained according to the equation described below.

$$d = (c \cdot T \cdot fB)/(2 \cdot fw)$$

where

 c: velocity of light (= $3 \times 10^8$) (m/s);
 T: transmission time (s);
 fB: beat frequency (= frequency of transmitted wave - frequency of reflected wave) (Hz); and
 fw: frequency sweep width (Hz).

When the distance d is obtained, whether the care receiver is standing or has fallen down can be determined on the basis of the magnitude of the distance d. For example, in Fig. 2, in a case where a height from a floor 101b to the ceiling 101a in the habitable room 101 is 2.4 m and the height of a care receiver is 1.65 m and in a case where the distance d obtained according to the equation described above is 0.70 m to 0.80 m, it can be determined that the care receiver is standing just below the second radio wave detector 70. On the other hand, in a case where the obtained distance d is 2.2 m to 2.3 m, it can be determined that the care receiver has fallen down just below the second radio wave detector 70. The determination (detection) described above of whether the care receiver has fallen down may be performed on the basis of the measured distance d by the second radio wave detector 70 itself, or information relating to the measured distance d may be transmitted to the management server 100a or the unit controller 40 and the management server 100a or the unit controller 40 may perform the determination described above. Alternatively, the management server 100a or the unit controller 40 may calculate the distance d described above on the basis of information output from the second radio wave detector 70 and may determine whether falling-down has occurred.

[Moving Body Detection Unit]

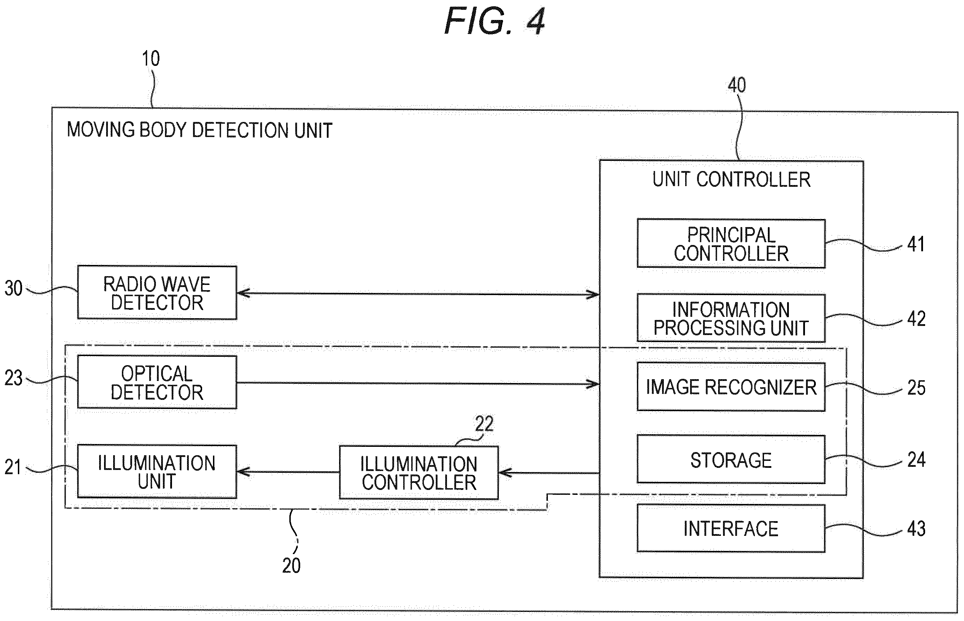

Next, the moving body detection unit 10 is described. Fig. 4 is a block diagram illustrating a rough configuration of the moving body detection unit 10. The moving body detection unit 10 is a unit that detects information relating to a care receiver (a subject) serving as a moving body inside the habitable room 101, and includes the image recognition system 20, the first radio wave detector 30, and the unit controller 40. The moving body detection unit 10 includes various sensors such as the first radio wave detector 30 or the optical detector 23 described later, and therefore the moving body detection unit 10 is also referred to as a sensor box.

The first radio wave detector 30 is a sensor that detects the condition of the care receiver in the habitable room 101 by radiating and receiving radio waves. The first radio wave detector 30 includes a radiation unit and a receiver that are not illustrated, and is configured by a microwave Doppler sensor that radiates, for example, microwaves in a 24 GHz band and receives reflected waves that have been reflected by the care receiver and have been Doppler-shifted. This enables the first radio wave detector 30 to detect a respiratory condition, a sleeping state, a heart rate, or the like of the care receiver as biological information from the received reflected waves.

When the care receiver is respiring (including during sleep), a minute movement of a body (a minute body movement) due to the respiration of the care receiver is generated. Therefore, the detection of the respiratory condition or sleeping state of the care receiver is equivalent to the detection of the minute body movement of the care receiver. Thus, it can be said that the first radio wave detector 30 functions as a minute body movement detector that detects the minute body movement of the care receiver (the subject).

The first radio wave detector 30 described above is driven in the CW mode (a first driving mode) for not modulating the radiation frequency of radio waves. Driving control on the first radio wave detector 30 may be performed by the management server 100a, or may be performed by the unit controller 40. Accordingly, the management server 100a or the unit controller 40 functions as a driving controller that controls the driving of the first radio wave detector 30.

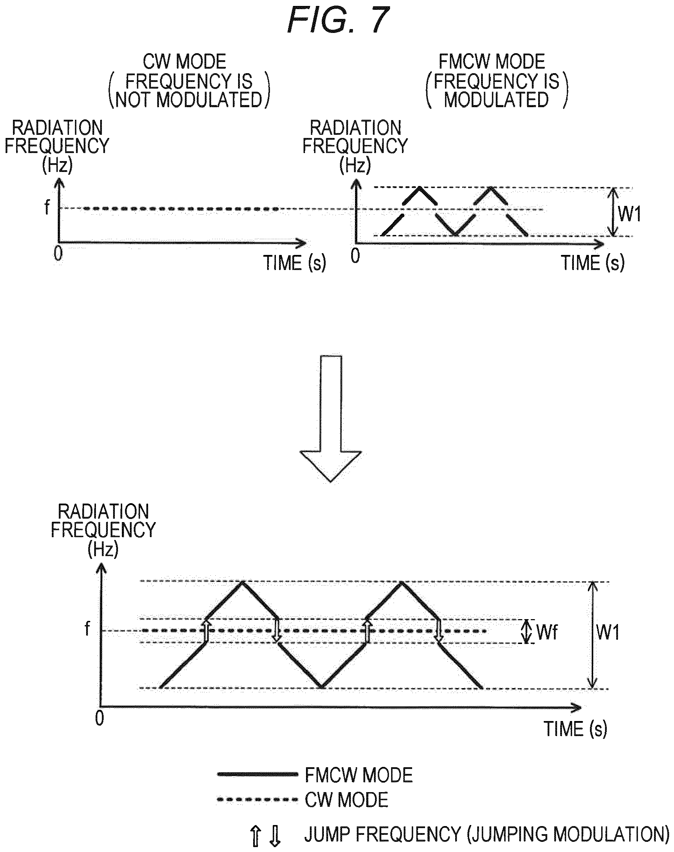

In the present embodiment, a radiation frequency of the CW mode is included in a modulation width W1 (a range between a minimum value and a maximum value of a modulation range of a radiation frequency) of a radiation frequency modulated in the FMCW mode (see Fig. 7 or the like). Therefore, by increasing a modulation width of the FMCW mode to the utmost, a reduction in the accuracy of the measurement of a distance according to the FMCW mode that is performed by the second radio wave detector 70 can be avoided.

The unit controller 40 is a control board that controls the operations of the image recognition system 20 and the first radio wave detector 30 and that performs image processing or signal processing on information obtained from the image recognition system 20 and the first radio wave detector 30 and outputs an obtained result as information relating to the condition of the care receiver to the management server 100a. In addition, the unit controller 40 can also control the operation of the second radio wave detector 70 via the communication line 200.

The unit controller 40 includes a principal controller 41, an information processing unit 42, an interface 43, a storage 24, and an image recognizer 25. The storage 24 and the image recognizer 25 are provided in the unit controller 40 in this example, but may be provided independently from the unit controller 40. Details of the storage 24 and the image recognizer 25 will be described later.

The principal controller 41 is configured by a CPU that controls the operations of respective units in the moving body detection unit 10. The information processing unit 42 and the image recognizer 25 may be configured by the CPU described above (may be integrated with the principal controller 41), or may be configured by another arithmetic unit or a circuit that performs specified processing.

The information processing unit 42 performs signal processing according to a prescribed algorithm on information (for example, image data) that has been output from the optical detector 23 described later in the image recognition system 20 or information (for example, data relating to a respiratory condition) that has been output from the first radio wave detector 30. Information obtained by performing signal processing is used in image recognition performed by the image recognition system 20 (in particular, the image recognizer 25).

The interface 43 is electrically connected to a network cable (not illustrated) of the communication line 200. Information relating to the condition of the care receiver that has been detected by the moving body detection unit 10 on the basis of an image or microwaves is transmitted to the management server 100a via the interface 43 and the communication line 200.

The image recognition system 20 includes an illumination unit 21, an illumination controller 22, and an optical detector 23.

The illumination unit 21 includes a light emitting diode (LED) that emits infrared rays (for example, near-infrared light) in order to enable photographing in the dark, and the illumination unit 21 is located on the ceiling 101a of the habitable room 101 and illuminates the inside of the habitable room 101. For example, the illumination unit 21 includes a plurality of LEDs, and illuminates the floor 101b (see Fig. 2) and walls that connect the ceiling 101a and the floor 101b in the habitable room 101. Control on illumination (emission of infrared rays) performed by the illumination unit 21 is performed by the illumination controller 22.

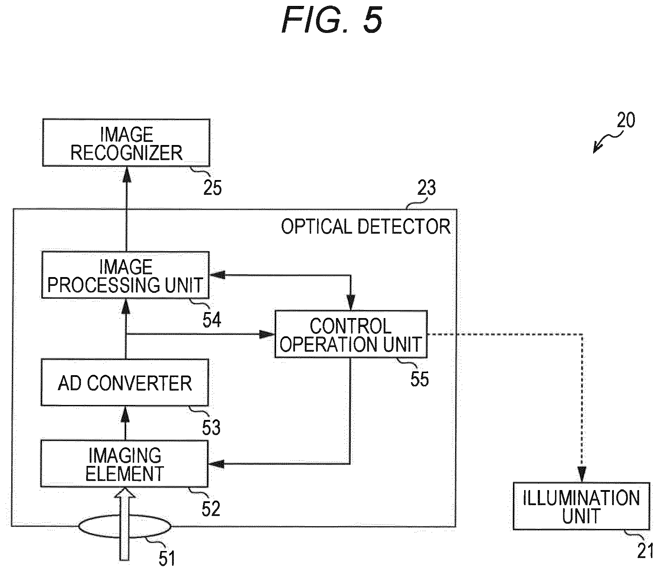

The optical detector 23 is an imaging unit that photographs the inside of the habitable room 101 under illumination performed by the illumination unit 21 and obtains an image, and is configured, for example, by a camera. Fig. 5 is a block diagram illustrating a detailed configuration of the optical detector 23. The optical detector 23 is arranged on the ceiling 101a of the habitable room 101 so as to be adjacent to the illumination unit 21, and performs photographing to obtain an image of a directly above viewpoint at which a visual field direction is a directly downward direction. This optical detector 23 includes, a lens 51, an imaging element 52, an analog/digital (AD) converter 53, an image processing unit 54, and a control operation unit 55.

The lens 51 is, for example, a fixed focus lens, and is configured by a general super wide angle lens or fisheye lens. As the super wide angle lens, a lens having a diagonal angle of view of 150° or larger can be used. This enables the inside of the habitable room 101 to be photographed toward the floor 101b from the ceiling 101a.

The imaging element 52 is configured by an image sensor such as a charge coupled device (CCD) or a complementary metal oxide semiconductor (CMOS). The imaging element 52 is configured by removing an IR cut filter in order to detect the condition of the care receiver even in a completely dark environment. An output signal from the imaging element 52 is input to the AD converter 53.

The AD converter 53 receives an analog image signal of an image captured by the imaging element 52, and converts the analog image signal into a digital image signal. The digital image signal output from the AD converter 53 is input to the image processing unit 54.

The image processing unit 54 receives the digital image signal output from the AD converter 53, and performs image processing, such as black correction, noise correction, color interpolation, or white balance, on the digital image signal. A signal after image processing that has been output from the image processing unit 54 is input to the image recognizer 25.

The control operation unit 55 executes an arithmetic operation, such as automatic exposure (AE), that relates to control on the imaging element 52, and performs control relating to an exposure time, a gain, or the like on the imaging element 52. In addition, the control operation unit 55 executes an arithmetic operation, such as suitable light amount setting or light distribution setting, on the illumination unit 21 as needed, and performs control. The control operation unit 55 may be configured to have a function of the illumination controller 22 described above.

The image recognition system 20 described above further includes the storage 24 and the image recognizer 25 that are described above.

The storage 24 is a memory that stores a control program that is executed by the unit controller 40 and various types of information, and is configured, for example, by a random access memory (RAM), a read only memory (ROM), a non-volatile memory, or the like.

The image recognizer 25 performs image recognition processing on image data of an image obtained by the optical detector 23. More specifically, the image recognizer 25 receives a signal on which image processing has been performed by the image processing unit 54 of the optical detector 23, and performs, for example, image recognition processing for extracting the contour of an object and recognizing a shape according to a method such as pattern matching. By doing this, the image recognizer 25 can recognize the condition of the care receiver in the habitable room 101.

Here, the condition of the care receiver in the habitable room 101 is assumed to be rising, leaving bed, going to bed, falling down, or the like. These conditions of the care receiver are distinguished from a minute body movement (a minute movement of a body due to respiration or the like) that is detected by the radio wave detector 30 in that the conditions of the care receiver include a magnitude action (a body movement) of the body of the care receiver.

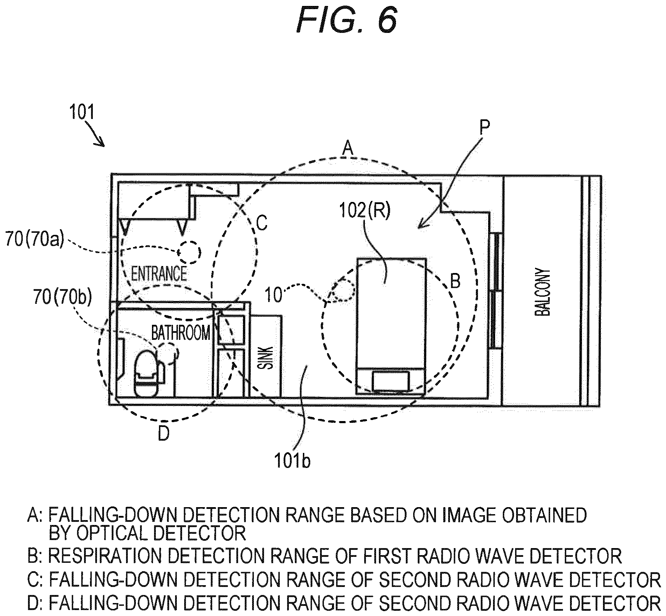

Fig. 6 schematically illustrates a falling-down detection range A based on an image obtained by the optical detector 23, a respiration detection range B of the first radio wave detector 30, a falling-down detection range C of a second radio wave detector 70a, and a falling-down detection range D of a second radio wave detector 70b when the moving body detection unit 10 and a plurality of second radio wave detectors 70 (70a and 70b) are provided in the habitable room 101. By performing image recognition processing on an obtained image by using the moving body detection unit 10, the falling-down of the care receiver can be detected, as described above, but depending on the size or layout of the habitable room 101, it is difficult to photograph and monitor the entirety of the habitable room 101 including the entrance and a bathroom by only using one moving body detection unit 10. Further, from the viewpoint of privacy protection, a camera that is used to monitor the care receiver cannot be provided in the bathroom.

Therefore, the moving body detection unit 10 is provided on the ceiling 101 a of the habitable room 101 in such a way that the optical detector 23 photographs the inside of an area P that is part of the habitable room 101 and obtains an image. At this time, the area P includes a sleeping region R in which a bed or a futon is arranged, and the first radio wave detector 30 is located in the area P in the habitable room 101, similarly to the optical detector 23. This enables the first radio wave detector 30 to detect biological information (respiration information) of a care receiver in the sleeping region R. On the other hand, the second radio wave detectors 70a and 70b are respectively provided in the entrance and the bathroom that are located outside the area P in the habitable room 101, and can detect the falling-down of the care receiver in the entrance and the bathroom.

[Driving Control on First Radio Wave Detector and Second Radio Wave Detector]

In the present embodiment, in order to eliminate mutual radio wave interference between the first radio wave detector 30 and the second radio wave detector 70 in the care support system 1, the driving controller selects any of (i) a simultaneous driving pattern, (ii) a combination of the simultaneous driving pattern and a partial driving pattern that have been temporally shifted from each other, and (iii) the partial driving pattern, and drives at least one of the first radio wave detector 30 and the second radio wave detector 70. In the simultaneous driving pattern, the driving controller simultaneously drives the first radio wave detector 30 and the second radio wave detector 70 so that a difference is constantly generated between a radiation frequency of the CW mode and a radiation frequency of the FMCW mode. In the partial driving pattern, the driving controller only drives one of the first radio wave detector 30 and the second radio wave detector 70, and stops the other. Details of each of the driving patterns will be described below. Here, the driving controller is assumed to be the management server 100a.

(i) Simultaneous Driving Pattern

Fig. 7 illustrates driving waveforms of the CW mode and the FMCW mode in the simultaneous driving pattern. When the driving controller selects the simultaneous driving pattern, in the FMCW mode, the driving controller modulates a radiation frequency in a frequency band excluding a prescribed frequency band Wf including a radiation frequency f (a fixed value) of the CW mode. Stated another way, in the FMCW mode, the driving controller modulates a radiation frequency of the FMCW mode in such a way that the radiation frequency f to be used in the CW mode is not used and the radiation frequency f of the CW mode is jumped.

In a case where the first radio wave detector 30 and the second radio wave detector 70 are simultaneously driven, by modulating the radiation frequency of the FMCW mode, as described above, a difference is constantly generated at any timing (any time) between the radiation frequency of the CW mode and the radiation frequency of the FMCW mode (see a lower drawing of Fig. 7). Therefore, the radio waves of the first radio wave detector 30 and the second radio wave detector 70 do not interfere with each other. Accordingly, even in a configuration in which both the first radio wave detector 30 and the second radio wave detector 70 that are driven in driving modes different from each other are used, erroneous detection due to radio wave interference can be eliminated. Further, the radiation frequency f of the CW mode is included in a modulation width W1 of a radiation frequency modulated in the FMCW mode. Therefore, erroneous detection due to radio wave interference can be eliminated in a state where a reduction in the accuracy of distance measurement performed by the second radio wave detector 70 is avoided by increasing the modulation width W1 to the maximum.

In particular, in the FMCW mode, the radiation frequency is modulated in a frequency band excluding the prescribed frequency band Wf including the radiation frequency f of the CW mode. Therefore, competition between the radiation frequency of the CW mode and the radiation frequency of the FMCW mode can be reliably avoided, and radio wave interference between these driving modes can be reliably eliminated.

(ii) Combination of Simultaneous Driving Pattern and Partial Driving Pattern

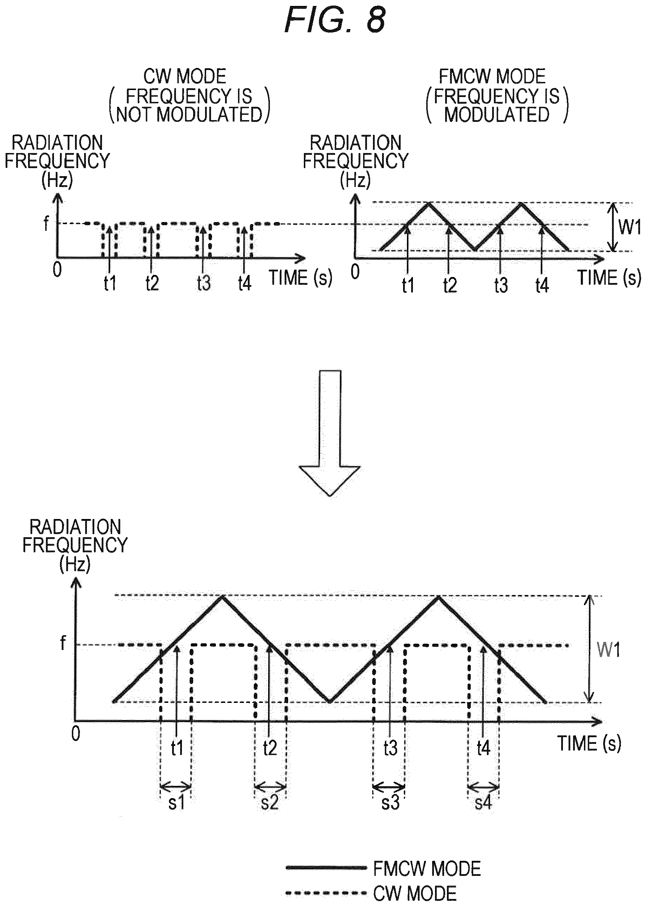

Fig. 8 illustrates driving waveforms of the CW mode and the FMCW mode in a driving pattern in which the simultaneous driving pattern and a partial driving pattern are combined. When the driving controller selects the combination above of driving patterns, only during a prescribed period including a timing at which the radiation frequency f of the CW mode matches the radiation frequency of the FMCW mode, the driving controller stops the driving of the first radio wave detector 30, and only drives the second radio wave detector 70. For example, in a case where the radiation frequency of the FMCW mode is modulated to match the radiation frequency f of the CW mode, for example, at times t1, t2, t3, and t4, the driving controller stops the driving of the first radio wave detector 30 during each of prescribed period s1 including time t1, prescribed period s2 including time t2, prescribed period s3 including time t3, and prescribed period s4 including time t4, and only drives the second radio wave detector 70 in the FMCW mode (the partial driving pattern). On the other hand, during a period excluding prescribed periods s1 to s4, the driving controller drives the first radio wave detector 30 in the CW mode, and simultaneously drives the second radio wave detector 70 in the FMCW mode (the simultaneous driving pattern).

During prescribed periods s1 to s4 described above, the driving of the first radio wave detector 30 is stopped, and only the second radio wave detector 70 is driven. Therefore, there is no possibility that radio waves will interfere between the first radio wave detector 30 and the second radio wave detector 70. In addition, during the period excluding prescribed periods s1 to s4 described above, the first radio wave detector 30 and the second radio wave detector 70 are simultaneously driven, but a difference is constantly generated between the radiation frequency f of the CW mode and the radiation frequency of the FMCW mode (see a lower drawing of Fig. 8). Therefore, radio waves do not interfere between the first radio wave detector 30 and the second radio wave detector 70. Accordingly, even in a combination of the simultaneous driving pattern and the partial driving pattern that have been temporally shifted from each other, mutual radio wave interference between the first radio wave detector 30 and the second radio wave detector 70 can be eliminated, and erroneous detection due to radio wave interference can be eliminated.

In particular, in the partial driving pattern, the driving controller stops the driving of the first radio wave detector 30 only during prescribed periods s1 to s4 including a timing at which the radiation frequency f of the CW mode matches the radiation frequency of the FMCW mode, and only drives the second radio wave detector 70, and this enables radio wave interference to be reliably eliminated during prescribed periods s1 to s4 during which there is a possibility that radio wave interference will occur.

(iii) Partial Driving Pattern

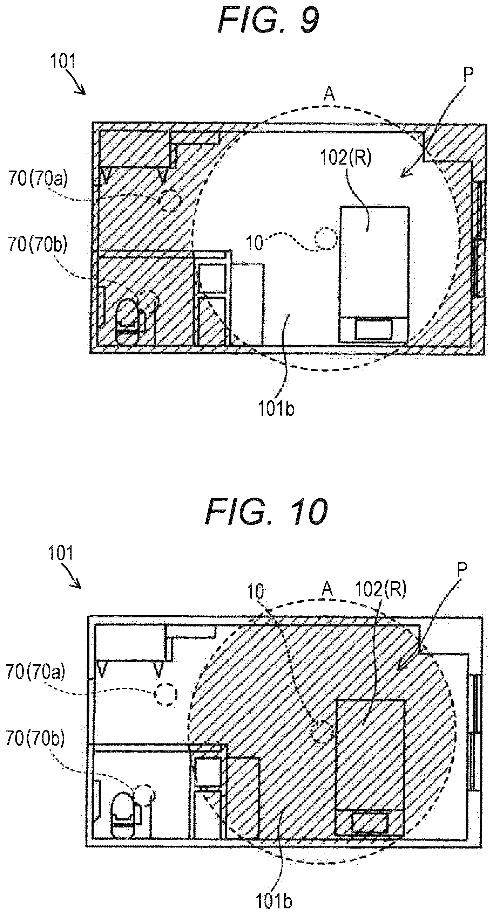

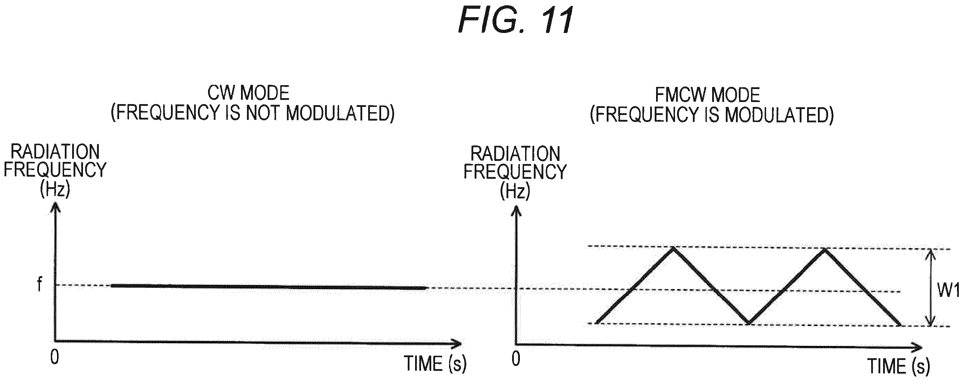

Fig. 9 schematically illustrates that the driving controller has determined that a care receiver is present in an area P that is part of the habitable room 101 on the basis of an image obtained by the optical detector 23, and Fig. 10 schematically illustrates that the driving controller has determined that the care receiver is absent in the area P that is part of the habitable room 101 on the basis of the image described above. Both drawings illustrate that the care receiver is absent in a hatched region. Further, Fig. 11 illustrates respective driving waveforms of the CW mode and the FMCW mode in the partial driving pattern. Note that the respective driving waveforms illustrated in Fig. 11 are the same as the respective driving waveforms illustrated in Fig. 14.

When the driving controller selects the partial driving pattern, the driving controller determines whether a care receiver is present in the area P that is part of the habitable room 101 on the basis of the image obtained by the optical detector 23 of the moving body detection unit 10, and only drives one of the first radio wave detector 30 and the second radio wave detector 70 on the basis of a determination result. More details are described below.

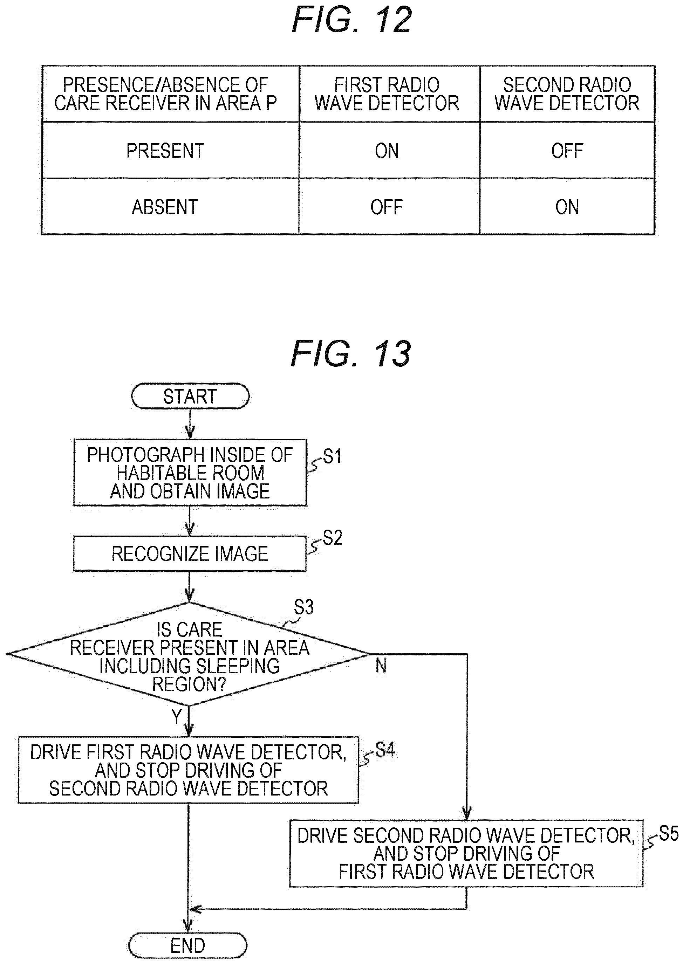

Fig. 12 illustrates an example of driving control that is performed on the first radio wave detector 30 and the second radio wave detector 70 on the basis of determination of whether a care receiver is present in the area P. In this drawing, driving is illustrated as "ON", and non-driving (stopping of driving) is illustrated as "OFF". In a case where the driving controller determines that the care receiver is present in the area P on the basis of the image described above, the driving controller drives the first radio wave detector 30 in the CW mode, and stops the driving of the second radio wave detector 70. In a case where the driving controller determines that the care receiver is absent in the area P on the basis of the image described above, the driving controller drives the second radio wave detector 70 in the FMCW mode, and stops the driving of the first radio wave detector 30.

Here, the image recognizer 25 of the moving body detection unit 10 can recognize the presence of the care receiver in the area P by performing image recognition processing on the image described above. Accordingly, the driving controller can determine whether the care receiver is present in the area P on the basis of a recognition result of the image recognizer 25. Further, by using such a result of image recognition, whether the care receiver is present can be accurately determined.

Fig. 13 is a flowchart illustrating the flow of an operation in the partial driving pattern. First, the optical detector 23 photographs the inside of the habitable room 101 toward the floor 101b from the ceiling 101a, and obtains an image (S1). Next, the image recognizer 25 performs image recognition processing on image data of the image described above (S2), and the management server 100a determines whether a care receiver is present in the area P that is part of the habitable room 101 on the basis of a result of image recognition processing (S3).

In a case where it is determined in S3 that the care receiver is present in the area P (see Fig. 9), the management server 100a drives the first radio wave detector 30 in the CW mode, and stops the driving of the second radio wave detector 70 (S4). By doing this, the first radio wave detector 30 can detect biological information (for example, a respiratory condition) of the care receiver P in the area P including the sleeping region R.

In contrast, in a case where it is determined in S3 that the care receiver is absent in the area P (see Fig. 10), the management server 100a drives the second radio wave detector 70 in the FMCW mode, and stops the driving of the first radio wave detector 30 (S5). By doing this, the radio wave detector 30 can measure a distance from the care receiver P, and the management server 100a can determine whether the care receiver has fallen down on the basis of the measured distance.

The flowchart of Fig. 13 only illustrates one cycle of the processes of S1 to S4 or S5, but the detection of respiration or the detection of falling-down can be constantly performed by returning to S1 after S4 or S5 and repeating the subsequent processes.

As described above, in the partial driving pattern, only one of the first radio wave detector 30 and the second radio wave detector 70 is driven, and the driving of the other is stopped, and therefore there is no possibility that mutual radio wave interference will occur. Accordingly, even in a configuration in which both the first radio wave detector 30 and the second radio wave detector 70 that are driven in driving modes different from each other are used, erroneous detection due to radio wave interference can be eliminated.

In addition, by determining whether the care receiver is present in the area P on the basis of the image described above and only driving one of the first radio wave detector 30 and the second radio wave detector 70 on the basis of a determination result, the driving controller can selectively drive only a radio wave detector that is located in an area (the inside of the area P or the outside of the area P) where the care receiver is estimated to be present from among the first radio wave detector 30 and the second radio wave detector 70, and can perform the detection of biological information of the care receiver inside the area P or the detection of the falling-down of the care receiver outside the area P.

Further, in a case where the care receiver is present inside the area P including the sleeping region R, the driving controller drives the first radio wave detector 30, and this enables the detection of biological information of the care receiver during sleep in the sleeping region R. In contrast, in a case where the care receiver is absent inside the area P including the sleeping region R, the driving controller drives the second radio wave detector 70 that is located outside the area P, and this enables detection (determination) of whether the care receiver has fallen down outside the area P on the basis of a distance measured by the second radio wave detector 70.

A configuration has been described above in which the management server 100a of the care support system 1 also serves as a driving controller that performs driving control (i) to (iii) described above, but the unit controller 40 of the moving body detection unit 10 may function as the driving controller described above. Stated another way, regardless of whether the driving controller is the management server 100a or the unit controller 40, an effect according to the present embodiment for eliminating erroneous detection by eliminating radio wave interference can be achieved by performing driving control (i) to (iii) described above.

Furthermore, the first radio wave detector 30 is provided inside the moving body detection unit 10, and the second radio wave detector 70 is provided outside the moving body detection unit 10 in the habitable room 101. In a configuration in which the moving body detection unit 10 includes the first radio wave detector 30, the care support system 1 can be configured by combining the moving body detection unit 10 described above and the second radio wave detector 70. In the configuration described above of the care support system 1, by performing driving control (i) to (iii) described above, radio wave interference between the first radio wave detector 30 and the second radio wave detector 70 can be eliminated, and erroneous detection can be eliminated.

The embodiment of the present invention has been described above, but the scope of the present invention is not limited to this. Various changes can be made without departing from the gist of the invention, and the invention can be implemented.

The care support system according to the present embodiment described above can be expressed as described below, and therefore it can be said that the operation and effect described below is exhibited.

The care support system according to the present embodiment includes a first radio wave detector and a second radio wave detector that are provided in an identical habitable room of a subject and that radiate and receive radio waves, and a driving controller that controls driving of the first radio wave detector and the second radio wave detector. The driving controller drives the first radio wave detector in a first driving mode for not modulating a radiation frequency of the radio waves, and drives the second radio wave detector in a second driving mode for modulating the radiation frequency of the radio waves. A radiation frequency of the first driving mode is included in a modulation width of a radiation frequency modulated in the second driving mode. The driving controller selects any of a simultaneous driving pattern, a partial driving pattern, and a combination of the simultaneous driving pattern and the partial driving pattern that have been temporally shifted from each other. In the simultaneous driving pattern, the first radio wave detector and the second radio wave detector are simultaneously driven so that a difference is constantly generated between the radiation frequency of the first driving mode and a radiation frequency of the second driving mode. In the partial driving pattern, only one of the first radio wave detector and the second radio wave detector is driven, and driving of the other of the first radio wave detector and the second radio wave detector is stopped.

By employing the configuration described above, the driving controller selects any of the simultaneous driving pattern, the partial driving pattern, and the combination of the simultaneous driving pattern and the partial driving pattern that have been temporally shifted from each other, and controls the driving of the first radio wave detector and the second radio wave detector that are provided in the identical habitable room. In the simultaneous driving pattern, a difference is constantly generated between the radiation frequency of the first driving mode (for example, the CW mode) and the radiation frequency of the second driving mode (for example, the FMCW mode), and therefore mutual radio wave interference does not occur. In the partial driving pattern, only one of the first radio wave detector and the second radio wave detector is driven, and the driving of the other is stopped. Therefore, there is no possibility that mutual radio wave interference will occur. In addition, as described above, in each of the simultaneous driving pattern and the partial driving pattern, radio wave interference does not occur, and therefore even in the combination of the simultaneous driving pattern and the partial driving pattern that have been temporally shifted from each other, radio wave interference does not occur.

As described above, in the care support system, even in a configuration in which both the first radio wave detector that is driven in the first driving mode and the second radio wave detector that is driven in the second driving mode are used, radio wave interference can be eliminated by performing the driving control described above on the first radio wave detector and the second radio wave detector. As a result, in the care support system, erroneous detection due to radio wave interference can be eliminated.

Further, even in a configuration in which the radiation frequency of the first driving mode is included in the modulation width of the radiation frequency modulated in the second driving mode, radio wave interference can be eliminated by performing the driving control described above. Therefore, erroneous detection due to radio wave interference can be eliminated in a state in which a reduction in the accuracy of distance measurement performed by the second radio wave detector is avoided by increasing the modulation width described above to the maximum.

It is desirable that, when the driving controller selects the simultaneous driving pattern, in the second driving mode, the driving controller modulate a radiation frequency in a frequency band excluding a prescribed frequency band including the radiation frequency of the first driving mode. In this case, control to constantly generate a difference between the radiation frequency of the first driving mode and the radiation frequency of the second driving mode can be reliably realized, and therefore radio wave interference can be reliably eliminated at the time of simultaneous driving of the first radio wave detector and the second radio wave detector.

It is desirable that, when the driving controller selects the combination of the simultaneous driving pattern and the partial driving pattern that have been temporally shifted from each other, in the partial driving pattern, the driving controller stop the driving of the first radio wave detector only during a prescribed period including a timing at which the radiation frequency of the first driving mode matches the radiation frequency of the second driving mode, and only drive the second radio wave detector.

In the simultaneous driving pattern, a difference is constantly generated between the radiation frequency of the first driving mode and the radiation frequency of the second driving mode, and radio wave interference does not occur. In the partial driving pattern, during the prescribed period during which radio wave interference may occur, only the second radio wave detector is driven, and the driving of the first radio wave detector is stopped. Therefore, radio wave interference does not occur similarly. Accordingly, during the entire period of the simultaneous driving pattern and the partial driving pattern, radio wave interference can be reliably eliminated.

It is desirable that the care support system further include an optical detector that photographs an inside of an area that is part of the habitable room and obtains an image, the area include a sleeping region in which a bed or a futon is arranged, the first radio wave detector be located in the area that is identical to an area of the optical detector, the second radio wave detector be located outside the area in the habitable room, and when the driving controller selects the partial driving pattern, the driving controller determine whether the subject is present in the area in accordance with the image obtained by the optical detector, and only drive one of the first radio wave detector and the second radio wave detector in accordance with a determination result.

The first radio wave detector is located in the area that is identical to the area of the optical detector in the habitable room, namely, inside the area including the sleeping region, and therefore biological information (for example, a respiratory condition) can be detected during sleeping of the subject. In addition, the second radio wave detector is located outside the area in the habitable room, and therefore a distance from the subject can be measured outside the area (outside a photographing range of the optical detector). Thus, whether the subject has fallen down can be detected (determined) on the basis of the measured distance.

Further, the driving controller determines whether the subject is present in the area in accordance with the image obtained by the optical detector, and only drives one of the first radio wave detector and the second radio wave detector in accordance with a determination result. Therefore, from among the first radio wave detector and the second radio wave detector, a radio wave detector that is located in an area where the subject is estimated to be present can be selectively driven, and the detection of biological information of the subject inside the area or the detection of the falling-down of the subject outside the area can be performed.

It is desirable that, in a case where the driving controller determines that the subject is present in the area in accordance with the image, the driving controller drive the first radio wave detector and stop the driving of the second radio wave detector. In a case where the subject is present inside the area including the sleeping region, the biological information of the subject during sleep can be detected by driving the first radio wave detector.

It is desirable that, in a case where the driving controller determines that the subject is absent inside the area on the basis of the image, the driving controller drive the second radio wave detector and stop the driving of the first radio wave detector. In a case where the subject is absent inside the area including the sleeping region, the subject is highly likely to be present outside the area. Accordingly, by driving the second radio wave detector that is located outside the area, whether the subject has fallen down outside the area can be detected (determined) on the basis of distance measurement.

The care support system may further include an image recognizer that recognizes the presence of the subject by performing image recognition processing on the image, and the driving controller may determine whether the subject is present in the area in accordance with a recognition result of the image recognizer. In this case, whether the subject is present can be accurately determined.

The care support system may include a moving body detection unit that is provided in the habitable room of the subject and detects information relating to the subject, and a management server that receives and manages the information transmitted from the moving body detection unit, and the driving controller may be provided in the moving body detection unit. In a configuration in which the driving controller is provided in the moving body detection unit that is provided in the habitable room, the effects described above can be achieved.

The care support system may include a moving body detection unit that is provided in the habitable room of the subject and detects information relating to the subject, and a management server that receives and manages the information transmitted from the moving body detection unit, and the management server may also serve as the driving controller. In a configuration in which the management server that receives and manages the information transmitted from the moving body detection unit in the habitable room also serves as the driving controller that controls the driving of the first radio wave detector and the second radio wave detector in the habitable room, as described above, the effects described above can be achieved.

The first radio wave detector may be provided inside the moving body detection unit, and the second radio wave detector may be provided outside the moving body detection unit in the habitable room. In this case, in a care support system that is configured by combining the moving body detection unit that includes the first radio wave detector inside and the second radio wave detector, the effects described above can be achieved.

Industrial Applicability

The present invention can be used, for example, in a care support system that supports daily life of a subject such as a care receiver in a habitable room.

Reference Signs List

1       Care support system
10      Moving body detection unit
23      Optical detector
25      Image recognizer
30      First radio wave detector
40      Unit controller (driving controller)
70      Second radio wave detector
100a    Management server (driving controller)
101     Habitable room
102     Bed
P       Area
R       Sleeping region

**Claims**

1.  A care support system comprising:

    a first radio wave detector and a second radio wave detector that are provided in an identical habitable room of a subject and that radiate and receive radio waves; and
    a driving controller that controls driving of the first radio wave detector and the second radio wave detector, wherein
    the driving controller drives the first radio wave detector in a first driving mode for not modulating a radiation frequency of the radio waves, and drives the second radio wave detector in a second driving mode for modulating the radiation frequency of the radio waves,
    a radiation frequency of the first driving mode is included in a modulation width of a radiation frequency modulated in the second driving mode,
    the driving controller selects any of a simultaneous driving pattern, a partial driving pattern, and a combination of the simultaneous driving pattern and the partial driving pattern that have been temporally shifted from each other,
    in the simultaneous driving pattern, the first radio wave detector and the second radio wave detector are simultaneously driven so that a difference is constantly generated between the radiation frequency of the first driving mode and a radiation frequency of the second driving mode, and
    in the partial driving pattern, only one of the first radio wave detector and the second radio wave detector is driven, and driving of another of the first radio wave detector and the second radio wave detector is stopped.

2.  The care support system according to claim 1, wherein when the driving controller selects the simultaneous driving pattern, in the second driving mode, the driving controller modulates a radiation frequency in a frequency band excluding a prescribed frequency band including the radiation frequency of the first driving mode.

3.  The care support system according to claim 1, wherein when the driving controller selects the combination of the simultaneous driving pattern and the partial driving pattern that have been temporally shifted from each other, in the partial driving pattern, the driving controller stops driving of the first radio wave detector only during a prescribed period including a timing at which the radiation frequency of the first driving mode matches the radiation frequency of the second driving mode, and only drives the second radio wave detector.

4.  The care support system according to claim 1, further comprising:

    an optical detector that photographs an inside of an area that is part of the habitable room and obtains an image, wherein
    the area includes a sleeping region in which a bed or a futon is arranged,
    the first radio wave detector is located in the area that is identical to an area of the optical detector,
    the second radio wave detector is located outside the area in the habitable room, and
    when the driving controller selects the partial driving pattern, the driving controller determines whether the subject is present in the area in accordance with the image obtained by the optical detector, and only drives one of the first radio wave detector and the second radio wave detector in accordance with a determination result.

5.  The care support system according to claim 4, wherein in a case where the driving controller determines that the subject is present in the area in accordance with the image, the driving controller drives the first radio wave detector and stops driving of the second radio wave detector.

6.  The care support system according to claim 4 or 5, wherein in a case where the driving controller determines that the subject is absent in the area in accordance with the image, the driving controller drives the second radio wave detector and stops driving of the first radio wave detector.

7.  The care support system according to any of claims 4 to 6, further comprising:

an image recognizer that recognizes presence of the subject by performing image recognition processing on the image, wherein the driving controller determines whether the subject is present in the area in accordance with a recognition result of the image recognizer.

8.  The care support system according to any of claims 1 to 7, further comprising:

a moving body detection unit that is provided in the habitable room of the subject and detects information relating to the subject; and a management server that receives and manages the information transmitted from the moving body detection unit, wherein the driving controller is provided in the moving body detection unit.

9.  The care support system according to any of claims 1 to 7, further comprising:

a moving body detection unit that is provided in the habitable room of the subject and detects information relating to the subject; and a management server that receives and manages the information transmitted from the moving body detection unit, wherein the management server also serves as the driving controller.

10. The care support system according to claim 8 or 9, wherein the first radio wave detector is provided inside the moving body detection unit, and the second radio wave detector is provided outside the moving body detection unit in the habitable room.

# FIG. 1

# FIG. 2

# FIG. 3

## FIG. 4

**MOVING BODY DETECTION UNIT** — 10

**UNIT CONTROLLER** — 40

- PRINCIPAL CONTROLLER — 41
- INFORMATION PROCESSING UNIT — 42
- IMAGE RECOGNIZER — 25
- STORAGE — 24
- INTERFACE — 43

30 — RADIO WAVE DETECTOR

23 — OPTICAL DETECTOR

21 — ILLUMINATION UNIT

22 — ILLUMINATION CONTROLLER

20

EP 3 502 738 A1

# FIG. 5

20

23

OPTICAL DETECTOR

```
IMAGE
RECOGNIZER
         25
```

```
IMAGE
PROCESSING UNIT
              54
```

```
AD CONVERTER
           53
```

```
IMAGING
ELEMENT
       52
```

51

```
CONTROL
OPERATION UNIT
            55
```

```
ILLUMINATION
UNIT
          21
```

# FIG. 6

A: FALLING-DOWN DETECTION RANGE BASED ON IMAGE OBTAINED
   BY OPTICAL DETECTOR
B: RESPIRATION DETECTION RANGE OF FIRST RADIO WAVE DETECTOR
C: FALLING-DOWN DETECTION RANGE OF SECOND RADIO WAVE DETECTOR
D: FALLING-DOWN DETECTION RANGE OF SECOND RADIO WAVE DETECTOR

## FIG. 7

CW MODE
$\left(\begin{array}{c}\text{FREQUENCY IS}\\\text{NOT MODULATED}\end{array}\right)$

FMCW MODE
$\left(\begin{array}{c}\text{FREQUENCY IS}\\\text{MODULATED}\end{array}\right)$

RADIATION
FREQUENCY
(Hz)

RADIATION
FREQUENCY
(Hz)

f

f

0 TIME (s)

0 TIME (s)

W1

RADIATION
FREQUENCY
(Hz)

f

Wf

W1

0 TIME (s)

—————— FMCW MODE

- - - - - - - CW MODE

⇧ ⇩ JUMP FREQUENCY (JUMPING MODULATION)

# FIG. 8

CW MODE
(FREQUENCY IS NOT MODULATED)

FMCW MODE
(FREQUENCY IS MODULATED)

RADIATION FREQUENCY (Hz)

RADIATION FREQUENCY (Hz)

RADIATION FREQUENCY (Hz)

——— FMCW MODE

-------- CW MODE

## FIG. 9

## FIG. 10

## FIG. 11

CW MODE
(FREQUENCY IS NOT MODULATED)

FMCW MODE
(FREQUENCY IS MODULATED)

RADIATION
FREQUENCY
(Hz)

RADIATION
FREQUENCY
(Hz)

f

W1

0

TIME (s)

0

TIME (s)

EP 3 502 738 A1

# FIG. 12

| PRESENCE/ABSENCE OF CARE RECEIVER IN AREA P | FIRST RADIO WAVE DETECTOR | SECOND RADIO WAVE DETECTOR |
|---|---|---|
| PRESENT | ON | OFF |
| ABSENT | OFF | ON |

# FIG. 13

START

PHOTOGRAPH INSIDE OF HABITABLE ROOM AND OBTAIN IMAGE — S1

RECOGNIZE IMAGE — S2

IS CARE RECEIVER PRESENT IN AREA INCLUDING SLEEPING REGION? — S3

N

Y

DRIVE FIRST RADIO WAVE DETECTOR, AND STOP DRIVING OF SECOND RADIO WAVE DETECTOR — S4

DRIVE SECOND RADIO WAVE DETECTOR, AND STOP DRIVING OF FIRST RADIO WAVE DETECTOR — S5

END

# FIG. 14

CW MODE
(FREQUENCY IS NOT MODULATED)

RADIATION
FREQUENCY
(Hz)

0

TIME (s)

FMCW MODE
(FREQUENCY IS MODULATED)

RADIATION
FREQUENCY
(Hz)

W1

0          t1      t2      t3      t4     TIME (s)

EP 3 502 738 A1

*FIG. 15*

<div align="center">

**INTERNATIONAL SEARCH REPORT**

</div>

| International application No. |
| --- |
| PCT/JP2017/023638 |

**A.  CLASSIFICATION OF SUBJECT MATTER**

*G01S13/87*(2006.01)i, *G01S13/34*(2006.01)i, *G01S13/536*(2006.01)i, *G01S13/86* (2006.01)i, *G08B21/02*(2006.01)i, *G08B25/04*(2006.01)i, *G08B25/10*(2006.01)i

According to International Patent Classification (IPC) or to both national classification and IPC

**B.  FIELDS SEARCHED**

Minimum documentation searched (classification system followed by classification symbols)

G01S13/87, G01S13/34, G01S13/536, G01S13/86, G08B21/02, G08B25/04, G08B25/10

Documentation searched other than minimum documentation to the extent that such documents are included in the fields searched

Jitsuyo Shinan Koho          1922–1996    Jitsuyo Shinan Toroku Koho    1996–2017
Kokai Jitsuyo Shinan Koho    1971–2017    Toroku Jitsuyo Shinan Koho    1994–2017

Electronic data base consulted during the international search (name of data base and, where practicable, search terms used)
JSTPlus/JMEDPlus/JST7580(JDreamIII)

**C.  DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2006-255141 A  (TDK Corp.),<br>28 September 2006 (28.09.2006),<br>paragraphs [0001] to [0008], [0055]<br>(Family: none) | 1-3,8-10<br>4-7 |
| Y | JP 3-115985 A  (Fujitsu Ltd.),<br>16 May 1991 (16.05.1991),<br>page 3, upper left column to lower right column<br>(Family: none) | 1-3,8-10 |

☒  Further documents are listed in the continuation of Box C.      ☐  See patent family annex.

| | |
| --- | --- |
| * Special categories of cited documents:<br>"A"  document defining the general state of the art which is not considered  to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 28 August 2017 (28.08.17) | 05 September 2017 (05.09.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
| --- | --- |

Form PCT/ISA/210 (second sheet) (January 2015)

**INTERNATIONAL SEARCH REPORT**

International application No.

PCT/JP2017/023638

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-107225 A  (Toyota Motor Corp.),<br>13 May 2010 (13.05.2010),<br>paragraphs [0005], [0022] to [0023], [0054] to [0059], [0070]; fig. 4<br>& US 2010/0103023 A1<br>paragraphs [0008], [0024] to [0025], [0064] to [0069], [0080]; fig. 4<br>& DE 102009046000 A1 | 1-3,8-10 |
| Y | JP 7-209417 A  (Yokogawa Electric Corp.),<br>11 August 1995 (11.08.1995),<br>paragraphs [0018] to [0027]; fig. 3, 4<br>(Family: none) | 2,8-10 |
| A | EP 2517621 A1  (Nederlandse Organisatie voor Toegepast),<br>31 October 2012 (31.10.2012),<br>entire text; all drawings<br>& US 2014/0058256 A1    & WO 2012/148280 A1 | 1-10 |

Form PCT/ISA/210 (continuation of second sheet) (January 2015)

**EP 3 502 738 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009080073 A

- JP 2005265615 A